# EUROPÄISCHE PATENTSCHRIFT

(11) **EP 4 426 572 B1**
(45) Veröffentlichungstag und Bekanntmachung des Hinweises auf die Patenterteilung: **02.04.2025**
(21) Anmeldenummer: 23706282.3
(22) Anmeldetag: 02.02.2023
(51) Int. Cl.: B60J 10/18, F16J 15/12, F16J 15/02

(54) **VERSTÄRKUNGSBAND FÜR EINEN FORMKÖRPER AUS EINER SPRITZFÄHIGEN FORMMASSE SOWIE FORMKÖRPER MIT EINEM DERARTIGEN VERSTÄRKUNGSBAND**
REINFORCING STRIP FOR A MOLDED BODY MADE OF AN INJECTION-MOLDABLE MOLDING COMPOUND, AND MOLDED BODY COMPRISING A REINFORCING STRIP OF THIS KIND
BANDE DE RENFORCEMENT POUR UN CORPS MOULÉ EN MATIÈRE À MOULER INJECTABLE ET CORPS MOULÉ DOTÉ D'UNE TELLE BANDE DE RENFORCEMENT

(30) Priorität: 03.02.2022 DE 202022100637 U
(43) Veröffentlichungstag der Anmeldung: 11.09.2024
(73) Patentinhaber: STG Stanztechnik GmbH & Co.KG, 84032 Altdorf (DE)
(72) Erfinder: NUTZ, Christian, 84061 Ergoldsbach (DE)
(74) Vertreter: Flügel Preissner Schober Seidel
(86) Internationale Anmeldenummer: PCT/EP2023/052607
(87) Internationale Veröffentlichungsnummer: WO 2023/148294

(56) Entgegenhaltungen:
- DE-U1- 202021 104 735
- US-A1- 2020 263 283

## Beschreibung

Die vorliegende Erfindung betrifft ein Verstärkungsband für einen Formkörper aus einer spritzfähigen Formmasse, aufweisend einen bandförmigen Grundkörper. Des Weiteren betrifft die Erfindung einen Formkörper mit einem derartigen Verstärkungsband.

Verstärkungsbänder der eingangs genannten Art werden zur Armierung eines Formkörpers aus einer spritzfähigen Formmasse, wie beispielsweise eines Dichtungsstranges aus elastomere Werkstoff, eingesetzt. Derartige Dichtungsstränge werden zum Abdichten von Öffnungen eines Fahrzeugs, wie beispielsweise einer Türöffnung, einer Fensteröffnung oder einer Heckklappenöffnung, verwendet.

Zur Befestigung des Dichtungsstranges ist die Öffnung mit einem die Öffnung umlaufenden Flansch versehen, auf welchen der Dichtungsstrang aufgesteckt beziehungsweise geklemmt wird. Hierzu ist das Verstärkungsband zu einem U-Profil umgeformt. Um ein Abziehen von dem Flansch zu verhindern, ist es erforderlich, dass das Verstärkungsband eine hohe Klemmkraft aufweist.

Bei der Weiterverarbeitung des zu einem U-Profil umgeformten Verstärkungsbandes zu einem Dichtungsstrang wird in einem anschließenden Extrusionsprozess das Verstärkungsband mit einer spritzfähigen Formmasse, wie beispielsweise Kunststoff und/oder Elastomer, ummantelt.

Um ein Durchdringen der spritzfähigen Formmasse zu ermöglichen, werden die Verstärkungsbänder mit Schlitzen versehen, welche zudem das Gewicht der Verstärkungsbänder reduzieren. Die Schlitze werden in einem kontinuierlichen Herstellungsverfahren durch rotatives Schneiden oder Stanzen in das Verstärkungsband eingebracht und durch Recken, wie beispielsweise Walzstrecken, anschließend aufgeweitet.

Da während der Extrusion hohe Kräfte in Längsrichtung auf das Verstärkungsband wirken, muss das Verstärkungsband neben der hohen Klemmkraft eine hohe Zugfestigkeit aufweisen.

Um diese Anforderungen zu erfüllen, sind die aus DE 100 33 454 A1 und DE 10 2016 005 074 A1 bekannten Verstärkungsbänder aus Stahl.

Des Weiteren geht aus DE 20 201 104 735 U1 ein Metallband als Einlage für Zier- oder Dichtstreifen oder als Kantenschutz hervor, welches insbesondere mit geschnittenen und/oder gestanzten Durchbrüchen versehen ist, wobei das Metallband aus mikrolegiertem Stahl oder Mehrphasenstahl besteht.

Der Erfindung liegt die Aufgabe zugrunde, ein Verstärkungsband und einen Formkörper zu schaffen, die eine verbesserte Zugfestigkeit bei gleichzeitig verringertem Materialeinsatz und Gewichtsreduktion aufweisen.

Zur Lösung der Aufgabe wird ein Verstärkungsband mit den Merkmalen eines der Ansprüche 1 bis 3 und ein Formkörper mit den Merkmalen des Anspruchs 13 vorgeschlagen.

Vorteilhafte Ausgestaltungen des Verstärkungsbands und des Formkörpers sind Gegenstand der jeweils abhängigen Ansprüche.

Gemäß einem Aspekt wird ein Verstärkungsband für einen Formkörper aus einer spritzfähigen Formmasse vorgeschlagen. Das Verstärkungsband weist einen bandförmigen Grundkörper, der eine Vielzahl an aufgeweiteten Randschlitzen, die sich von Randabschnitten des Grundkörpers quer zu seiner Längsrichtung nach innen erstrecken, und eine Vielzahl an aufgeweiteten Innenschlitzen, die in einem zwischen den Randabschnitten des Grundkörpers befindlichen Innenabschnitt angeordnet sind, aufweist, wobei eine Öffnungsweite der Randschlitze und/oder der Innenschlitze zwischen 0,5 mm und 4 mm beträgt, und wobei der Grundkörper aus einem der folgenden Werkstoffe besteht:
- HC420LA - Werkstoffnummer: 1.0556
- HC300B - Werkstoffnummer: 1.0444
- HCT490X - Werkstoffnummer: 1.0939
- HCT780T - Werkstoffnummer: 1.0948
- HCT780C - Werkstoffnummer: 1.0954.

Gemäß einem weiteren Aspekt wird ein Verstärkungsband für einen Formkörper aus einer spritzfähigen Formmasse vorgeschlagen. Das Verstärkungsband weist einen bandförmigen Grundkörper, der eine Vielzahl an aufgeweiteten Randschlitzen, die sich von Randabschnitten des Grundkörpers quer zu seiner Längsrichtung nach innen erstrecken, und eine Vielzahl an aufgeweiteten Innenschlitzen, die in einem zwischen den Randabschnitten des Grundkörpers befindlichen Innenabschnitt angeordnet sind, aufweist, wobei eine Öffnungsweite der Randschlitze und/oder der Innenschlitze zwischen 0,5 mm und 4 mm beträgt, und wobei der Grundkörper aus einem der folgenden Werkstoffe besteht:
- GB/T 1591 Q420 C
- GB/T 1591 Q460 C.

Ferner wird ein Verstärkungsband für einen Formkörper aus einer spritzfähigen Formmasse vorgeschlagen. Das Verstärkungsband weist einen bandförmigen Grundkörper, der der eine Vielzahl an aufgeweiteten Randschlitzen, die sich von Randabschnitten des Grundkörpers quer zu seiner Längsrichtung nach innen erstrecken, und eine Vielzahl an aufgeweiteten Innenschlitzen, die in einem zwischen den Randabschnitten des Grundkörpers befindlichen Innenabschnitt angeordnet sind, aufweist, wobei eine Öffnungsweite der Randschlitze und/oder der Innenschlitze zwischen 0,5 mm und 4 mm beträgt, und wobei der Grundkörper aus einem der folgenden Werkstoffe besteht:
- ASTM A1008 HSLA-S Grade 45
- ASTM A1008 HSLA-S Grade 55.

Durch die Verwendung eines der genannten Materialien für den Grundkörper weist das Verstärkungsband eine erhöhte Zugfestigkeit auf. Dadurch kann die Banddicke und somit der Materialeinsatz reduziert und gleichzeitig das Gewicht des Verstärkungsbandes verringert werden. Bei den genannten Werkstoffen handelt es sich um mikrolegierten Stahl oder Mehrphasenstahl.

Die in den unabhängigen Ansprüchen angegebenen Werkstoffe beziehen sich auf folgende Normen: HC420LA und HC300B beziehen sich auf die deutsche Fassung von September 2013 der europäischen Norm DIN EN 10 268. HCT490X, HCT780T und HCT780C beziehen sich auf die deutsche Fassung von Oktober 2015 der europäischen Norm DIN EN 10 338. GB/T1591 bezieht sich auf den National Standard of the People's Republic of China, issue date 6.12.2008. ASTM A 1008 bezieht sich auf den US Standard A 1008/A 1008M-05a der ASTM International.

Das Verstärkungsband kann auch als Gerüstband, Einlegeband oder Trägerband bezeichnet werden.

Der Formkörper kann ein Dichtungsstrang für ein Fahrzeug, ein Zierstrang oder ein Strang zum Schutz von Kanten sein. Die spritzfähige Formmasse kann ein Kunststoff und/oder ein elastomerer Werkstoff sein.

In einer vorteilhaften Ausgestaltung weist der Grundkörper eine Dicke zwischen 0,4 mm und 0,5 mm, insbesondere zwischen 0,41 mm und 0,47 mm, weiterhin insbesondere zwischen 0,43 mm und 0,46mm auf. Aufgrund der geringen Dicke weist das Verstärkungsband ein geringes Gewicht auf.

Die Randschlitze können nachinnen keilförmig oder spitz auslaufen. Vorteilhaft sind die Randschlitze bandaußenseitig offen, das heißt, die Randschlitze weisen an den Rändern des Grundkörpers keine feste Umrandung auf. Vorteilhaft sind die Innenschlitze als Öffnungen mit einer festen Umrandung ausgebildet. Die Öffnungen können rautenförmig ausgebildet sein.

Vorteilhaft entstehen durch die Randschlitze Lamellen, welche im umgeformten Zustand des Verstärkungsbandes einen Flansch einer Fahrzeugöffnung umgreifen und die Klemmkraft aufbringen. Die Lamellen können sich unmittelbar gegenüberliegen oder versetzt zueinander gegenüberliegen.

Vorteilhaft werden die Randschlitze und/oder die Innenschlitze durch rotatives Schneiden oder Stanzen in den Grundkörper eingebracht, und durch anschließendes Recken, wie beispielsweise Walzstrecken, des Grundkörpers werden die Randschlitze und/oder die Innenschlitze aufgeweitet.

Weiterhin vorteilhaft beträgt eine Öffnungsweite der Randschlitze und/oder der Innenschlitze zwischen 1 mm und 3,5 mm.

In einer vorteilhaften Ausgestaltung weisen die Randschlitze eine Länge auf, die zwischen einem Drittel und der Hälfte einer Breite des Verstärkungsbandes entspricht, und die Innenschlitze weisen eine Länge auf, die zwischen 1/8 und 2/3 der Breite des Verstärkungsbandes entspricht.

In einer vorteilhaften Ausgestaltung sind die Innenschlitze aus wenigstens einer ersten Reihe mit einer ersten Kontur und aus wenigstens einer zweiten Reihe mit einer zweiten Kontur gebildet. Weiterhin vorteilhaft sind die Innenschlitze aus zwei ersten Reihen mit einer ersten Kontur und aus einer zweiten Reihe mit einer zweiten Kontur gebildet. In diesem Fall können die Randschlitze eine V-Form aufweisen, wobei die Randschlitze vorteilhaft spitz nach innen zulaufen.

Vorteilhaft sind die Innenschlitze der ersten Reihe länger sind als die Innenschlitze der zweiten Reihe. Die Randschlitze können eine Länge aufweisen, die ca. 1/3 der Breite des Verstärkungsbandes entspricht. Die Innenschlitze der ersten Reihe können eine Länge aufweisen, die ca. 1/3 der Breite des Verstärkungsbandes entspricht und die Innenschlitze der zweiten Reihe können eine Länge aufweisen, die ca. 1/8 der Breite des Verstärkungsbandes entspricht.

Die erste Kontur kann näherungsweise eine Tropfenform aufweisen und die zweite Kontur kann näherungsweise die Form eines Hexaeders aufweisen.

In einer vorteilhaften Ausgestaltung ist abwechselnd in Längsrichtung des Verstärkungsbandes zwischen zwei Randschlitzen jeweils ein Innenschlitz der zweiten Reihe angeordnet und zwischen jeweils zwei aufeinanderfolgenden Paaren von Randschlitzen sind zwei sich gegenüberliegende Innenschlitze der ersten Reihe angeordnet.

In einer vorteilhaften Ausgestaltung überlappen sich die Randschlitze und die Innenschlitze quer zur Längsrichtung, wobei die sich überlappenden Randschlitze und Innenschlitze durch Stege voneinander getrennt sind, wobei die Stege eine Breite zwischen 1 mm und 3 mm aufweisen.

In einer vorteilhaften Ausgestaltung sind abwechselnd in Längsrichtung des Verstärkungsbandes zwei Randschlitze einander gegenüberliegend und in Längsrichtung versetzt dazu ein Innenschlitz angeordnet.

In einer vorteilhaften Ausgestaltung sind abwechselnd in Längsrichtung des Verstärkungsbandes ein Randschlitz eines ersten Randabschnittes und ein Innenschlitz einander gegenüberliegend und in Längsrichtung versetzt dazu ein Randschlitz eines zweiten Randabschnittes und ein Innenschlitz einander gegenüberliegend angeordnet.

In einer vorteilhaften Ausgestaltung sind abwechselnd in Längsrichtung des Verstärkungsbandes zwischen zwei sich paarweise gegenüberliegenden Randschlitzen ein Innenschlitz und in Längsrichtung versetzt dazu zwei sich gegenüberliegende Innenschlitze angeordnet.

In einer vorteilhaften Ausgestaltung ist eine Dicke der Randabschnitte größer als eine Dicke des Innenabschnittes. Durch die Verdickung der Ränder wird bei der Verwendung des Verstärkungsbandes in einem Formkörper eine Beschädigung der das Verstärkungsband umhüllenden Formmasse verhindert. Dadurch kann bei einem Einsatz eines mit dem Verstärkungsband versehenen Dichtungsstrangs als Türdichtung eine Zerstörung eines Kopf-Airbags vermieden werden.

In einer vorteilhaften Ausgestaltung ist der Grundkörper ein Warm- oder Kaltumformstahl.

Gemäß einem weiteren Aspekt wird ein Formkörper aus einer spritzfähigen Formmasse mit einem erfindungsgemäßen Verstärkungsband vorgeschlagen.

In einer vorteilhaften Ausgestaltung ist der Formkörper aus einem Kunststoff und/oder einem Elastomermaterial. Der Formkörper kann durch Spritzgießen oder Extrusion hergestellt werden. Hierzu kann das Verstärkungsband zunächst zu einem U-förmigen Profil umgeformt, insbesondere gebogen werden, und anschließend kann das Verstärkungsband mit einem Kunststoff oder einem Elastomermaterial umspritzt werden.

In einer vorteilhaften Ausgestaltung ist das Verstärkungsband zu einem V-förmigen Profil oder einem U-förmigen Profil umgeformt. Das U-förmige Profil kann zur Befestigung des Formkörpers auf einen Flansch, beispielsweise auf einen Flansch einer Fahrzeugöffnung, aufgesteckt beziehungsweise aufgeklemmt werden.

In einer vorteilhaften Ausgestaltung ist der Formkörper ein Dichtungsstrang für ein Fahrzeug. Der Dichtungsstrang kann eine Dichtlippe und einen Aufsteckschacht aufweisen. Vorteilhaft ist das zu einem V-Profil oder einem U-Profil umgeformte Verstärkungsband in den Aufnahmeschacht eingebettet.

Nachfolgend werden Verstärkungsbänder und Dichtungsstränge sowie weitere Merkmale und Vorteile anhand von Ausführungsbeispielen näher erläutert, die in den Figuren schematisch dargestellt sind. Hierbei zeigen:
- Fig. 1: eine Draufsicht auf ein Verstärkungsband gemäß einer ersten Ausführungsform;
- Fig. 2: eine Vorderansicht des Verstärkungsbandes von Fig. 1;
- Fig. 3: eine perspektivische Ansicht des zu einem U-Profil umgeformten Verstärkungsband von Fig. 1;
- Fig. 4: eine perspektivische Darstellung eines Dichtungsstrangs mit dem zu einem U-Profil umgeformten Verstärkungsband von Fig. 2;
- Fig. 5: eine Vorderansicht eines Verstärkungsbandes gemäß einer zweiten Ausführungsform;
- Fig. 6: eine perspektivische Ansicht des zu einem U-Profil umgeformten Verstärkungsbands gemäß der zweiten Ausführungsform;
- Fig. 7: eine perspektivische Darstellung eines Dichtungsstrangs mit dem zu einem U-Profil umgeformten Verstärkungsband von Fig. 6;
- Fig. 8: eine Draufsicht auf ein Verstärkungsband gemäß einer dritten Ausführungsform;
- Fig. 9: eine Vorderansicht des Verstärkungsbandes von Fig. 8;
- Fig. 10: eine perspektivische Ansicht des zu einem U-Profil umgeformten Verstärkungsbands von Fig. 8;
- Fig. 11: eine Draufsicht auf ein Verstärkungsband gemäß einer vierten Ausführungsform;
- Fig. 12: eine Vorderansicht des Verstärkungsbandes von Fig. 11;
- Fig. 13: eine perspektivische Ansicht des zu einem U-Profil umgeformten Verstärkungsbands von Fig. 11;
- Fig. 14: eine Draufsicht auf ein Verstärkungsband gemäß einer fünften Ausführungsform;
- Fig. 15: eine Draufsicht auf ein Verstärkungsband gemäß einer sechsten Ausführungsform; und
- Fig. 16: eine perspektivische Darstellung eines Dichtungsstranges mit dem zu einem U-Profil umgeformten Verstärkungsbands von Fig. 15.

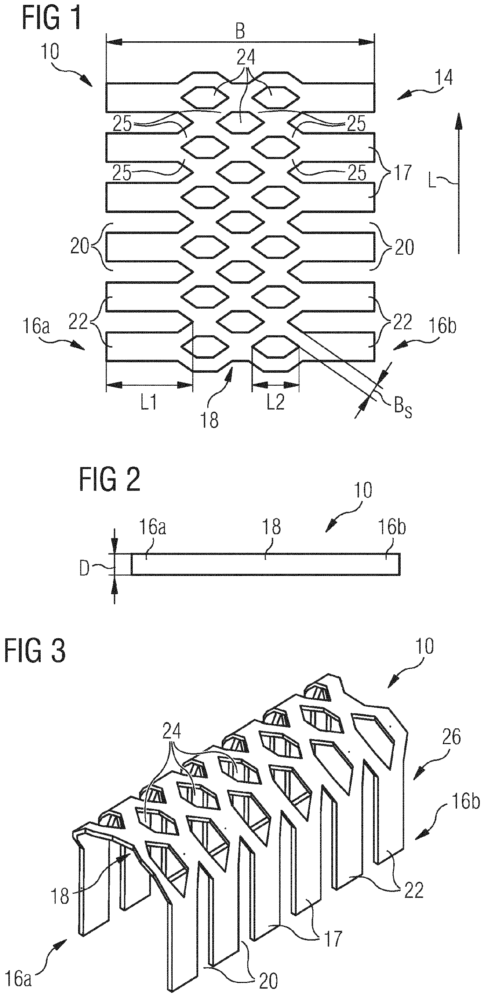

In den Figuren 1 und 2 ist ein Verstärkungsband 10 gezeigt, das zur Armierung eines in Fig. 3 dargestellten Formkörpers 11 dient. Der Formkörper 11 ist vorliegend ein Dichtungsstrang 12 für ein nicht dargestelltes Fahrzeug, der eine Dichtlippe 28 und einen Aufsteckschacht 30 aufweist.

Das Verstärkungsband 10 weist eine Breite B zwischen 15 mm und 60 mm, insbesondere zwischen 20 mm und 45 mm, und eine Dicke D zwischen 0,4 mm und 0,5 mm, insbesondere zwischen 0,41 mm und 0,47 mm, weiterhin insbesondere zwischen 0,43 mm und 0,46mm, auf.

Das Verstärkungsband 10 umfasst einen bandförmigen Grundkörper 14, der aus ersten Randabschnitten 16a und zweiten Randabschnitten 16b und einem dazwischen angeordneten Innenabschnitt 18 gebildet ist.

Jeder der Randabschnitte 16a, 16b weist eine Vielzahl an Lamellen 17 auf, die von Randschlitzen 20 unterbrochen werden. Wie in Fig. 1 ersichtlich ist, erstrecken sich die Randschlitze 20 von einem Rand 22 des Grundkörpers 14 quer zur Längsrichtung L nach innen, wobei sich immer zwei Randschlitze 20 gegenüber liegen. Die Randschlitze 20 sind nach innen keilförmig ausgebildet.

In dem Innenabschnitt 18 sind Innenschlitze 24 eingebracht, die zu beiden Seiten hin keilförmig ausgebildet sind. Wie in Fig. 1 ersichtlich ist, ist abwechselnd in Längsrichtung L des Verstärkungsbandes 10 zwischen zwei Randschlitzen 22 jeweils ein Innenschlitz 24 angeordnet und zwischen jeweils zwei aufeinanderfolgenden Paaren von Randschlitzen 20 sind zwei sich gegenüberliegende Innenschlitze 24 angeordnet. Die Randschlitze 20 weisen eine Länge L1 auf, die ca. ein Drittel der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Die Randschlitze 20 und die Innenschlitze 24 werden durch rotatives Schneiden oder Stanzen des Grundkörpers 14 erzeugt und durch Recken, das heißt, durch Ziehen des Grundkörpers 14 in Längsrichtung L, beispielsweise mittels Walzstrecken, in die in Fig. 1 dargestellte Form aufgeweitet. Eine Öffnungsweite der Randschlitze 22 und der Innenschlitze 24 kann zwischen 1 mm und 4 mm betragen. Die Lamellen 17 können eine Breite zwischen 2,5 und 4,5 mm aufweisen.

Wie zudem in Fig. 1 ersichtlich ist, überlappen sich die Randschlitze 20 und die Innenschlitze 24 quer zur Längsrichtung L, wobei die überlappenden Randschlitze 20 und Innenschlitze 24 durch Stege 25 voneinander getrennt sind, die eine Breite zwischen 1 mm und 3 mm aufweisen.

Der Grundkörper 14 besteht aus einem der folgenden Werkstoffe:
- HC420LA - Werkstoffnummer: 1.0556
- HC300B - Werkstoffnummer: 1.0444
- HCT490X - Werkstoffnummer: 1.0939
- HCT780T - Werkstoffnummer: 1.0948
- HCT780C - Werkstoffnummer: 1.0954
- GB/T 1591 Q420 C
- GB/T 1591 Q460 C
- ASTM A1008 HSLA-S Grade 45
- ASTM A1008 HSLA-S Grade 55.

Durch die Verwendung eines der aufgelisteten Werkstoffe für den Grundkörper 16 ist die Festigkeit des Verstärkungsbandes 10 erhöht. Dadurch kann das Verstärkungsband 10 weiter gereckt und infolgedessen kann der Materialeinsatz minimiert und das Gewicht des Verstärkungsbandes 10 reduziert werden.

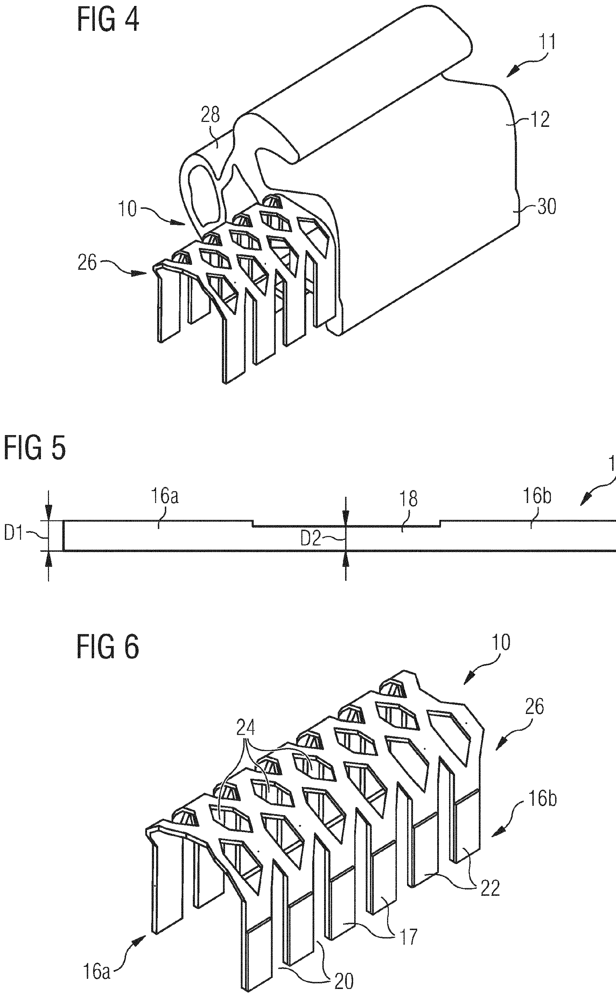

Zur Armierung des in Fig. 4 dargestellten Dichtungsstrangs 12 wird das Verstärkungsband 10 zu einem U-förmigen Profil 26 gebogen, wie dies in Fig. 3 dargestellt ist. Anschließend wird das U-Profil 26 in einem Extrusionsverfahren mit einem Kunststoff oder elastomeren Material umspritzt, so dass der als Dichtungsstrang 12 ausgebildete Formkörper 11 entsteht.

In den Figuren 5 bis 7 ist eine zweite Ausführungsform des Verstärkungsbands 10 gezeigt, die sich von der ersten Ausführungsform dadurch unterscheidet, dass eine Dicke D1 der Randabschnitte 16a, 16b, insbesondere der Ränder 22, größer als eine Dicke D2 des Innenabschnitts 18 ist. Dadurch wird eine Beschädigung des Formkörpers 11 vermieden.

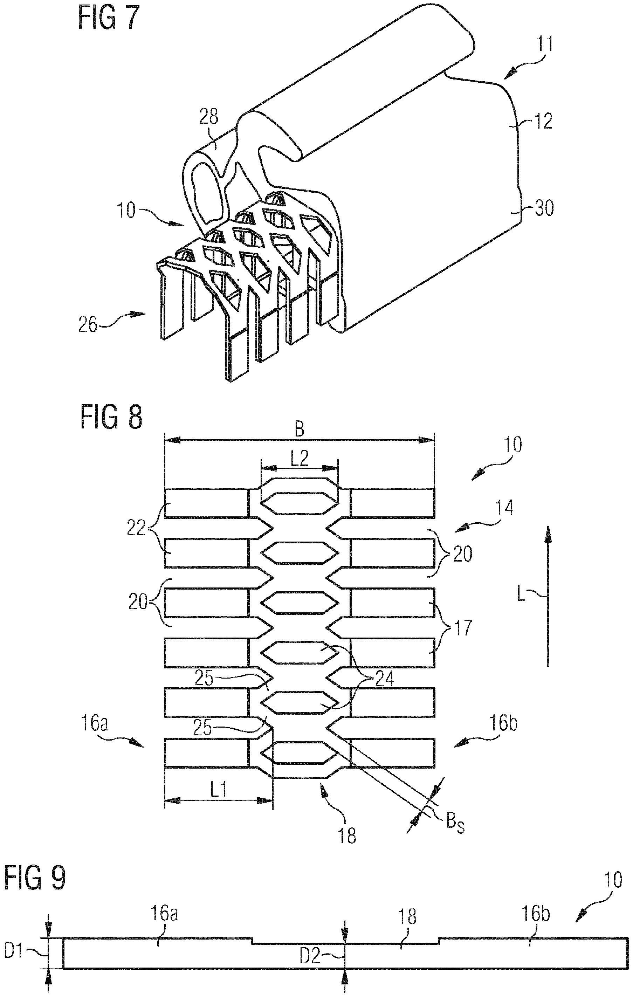

In den Figuren 8 bis 10 ist eine dritte Ausführungsform des Verstärkungsbandes 10 gezeigt, die sich von den anderen beiden Ausführungsformen durch die Anordnung der Randschlitze 20 und der Innenschlitze 24 unterscheidet.

Wie in Fig. 8 ersichtlich ist, sind abwechselnd in Längsrichtung L des Verstärkungsbandes 10 paarweise zwei Randschlitze 20 einander gegenüberliegend und in Längsrichtung L versetzt dazu ein Innenschlitz 24 in den Grundkörper 14 eingebracht.

Die Randschlitze 20 weisen eine Länge L1 auf, die ca. ein Drittel der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Wie insbesondere in Fig. 9 ersichtlich ist, ist die Dicke D1 der Randabschnitte 16a, 16b des Verstärkungsbandes 10 der dritten Ausführungsform größer als die Dicke D2 des Innenabschnitts 18. In einer nicht dargestellten Ausführungsform kann das Verstärkungsband 10 der dritten Ausführungsform wie das Verstärkungsband 10 der ersten Ausführungsform eine quer zur Längsrichtung L gleichmäßige Dicke D aufweisen.

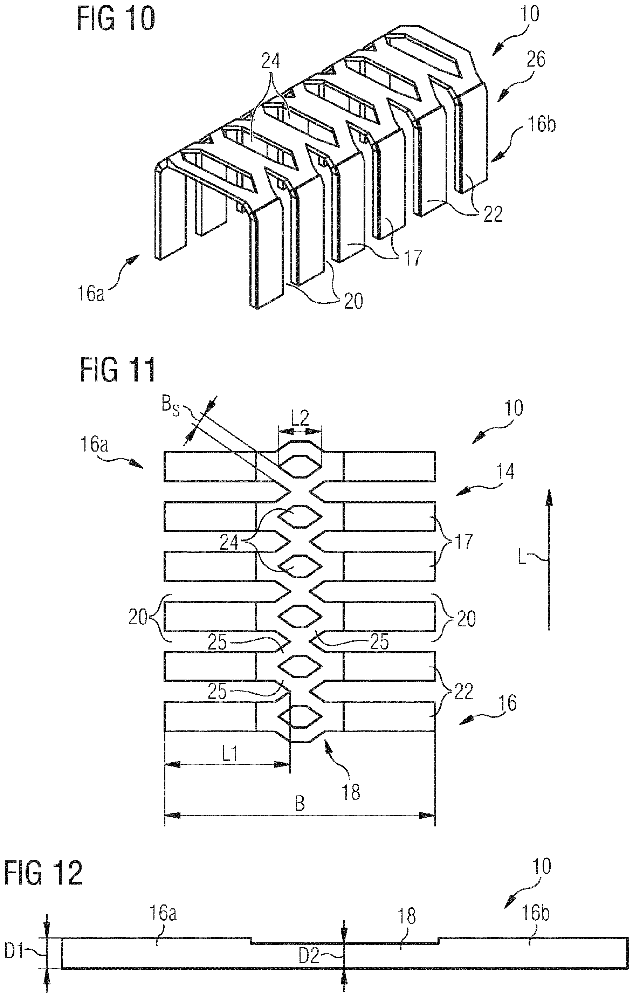

Das in Fig. 8 dargestellte Verstärkungsband 10 wird zu einem U-förmigen Profil 26 gebogen, wie dies in Fig. 10 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

In den Figuren 11 bis 13 ist eine vierte Ausführungsform des Verstärkungsbandes 10 gezeigt, die sich von der dritten Ausführungsform in der Länge L1 der Randschlitze und der Länge L2 der Innenschlitze unterscheidet.

Ein Vergleich der Fig. 8 mit Fig. 11 veranschaulicht, dass bei der vierten Ausführungsform im Vergleich zu der dritten Ausführungsform die Länge L1 der Randschlitze 20 größer und die Länge L2 der Innenschlitze 24 kleiner ist.

Die Randschlitze 20 der vierten Ausführungsform weisen eine Länge L1 auf, die ca. der Hälfte der Breite B des Verstärkungsbandes 10 entspricht, und die Innenschlitze 24 weisen eine Länge L2 auf, die zwischen 1/8 und 2/3 der Breite B des Verstärkungsbandes 10 entspricht. Dadurch weist das zu einem U-förmigen Profil 26 gebogenene Verstärkungsband der vierten Ausführungsform im Vergleich zu dem U-förmigen Profil der dritten Ausführungsform eine größere Höhe bei einer gleichzeitig geringeren Breite auf.

Wie insbesondere in Fig. 12 ersichtlich ist, ist die Dicke D1 der Randabschnitte 16a, 16b des Verstärkungsbandes 10 der vierten Ausführungsform größer als die Dicke D2 des Innenabschnitts 18. In einer nicht dargestellten Ausführungsform kann das Verstärkungsband 10 der vierten Ausführungsform wie das Verstärkungsband 10 der ersten Ausführungsform eine quer zur Längsrichtung L gleichmäßige Dicke D aufweisen.

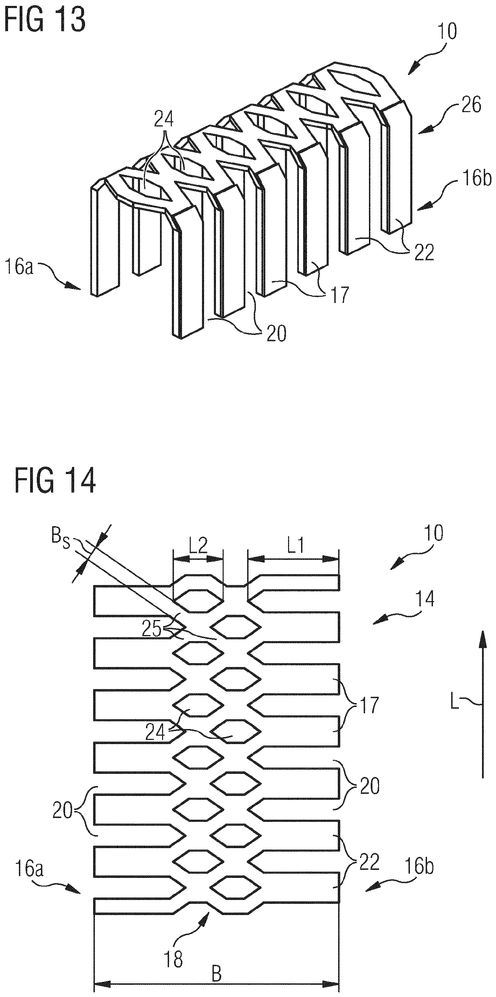

Das in Fig. 11 dargestellte Verstärkungsband 10 wird zu einem U-förmigen Profil 26 gebogen, wie dies in Fig. 13 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

In Fig. 14 ist eine fünfte Ausführungsform des Verstärkungsbandes 10 gezeigt, die sich von den anderen Ausführungsformen durch die Anordnung der Randschlitze 20 und der Innenschlitze 24 unterscheidet.

Wie in Fig. 14 ersichtlich ist, sind sowohl die Randschlitze 20 als auch die Innenschlitze 24 in Längsrichtung L versetzt zueinander angeordnet. Insbesondere sind abwechselnd in Längsrichtung L des Verstärkungsbandes 10 ein Randschlitz 20 eines ersten Randabschnittes 16a und ein Innenschlitz 24 einander gegenüberliegend und in Längsrichtung L versetzt dazu ein Randschlitz 20 eines zweiten Randabschnittes 16b und ein Innenschlitz 24 einander gegenüberliegend angeordnet.

Die Randschlitze 20 der fünften Ausführungsform weisen eine Länge L1 auf, die ca. 1/3 der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Bei der in Fig. 14 dargestellten fünften Ausführungsform des Verstärkungsbandes 10 können die Randabschnitte 16a, 16b eine Dicke D1 aufweisen, die, wie in den Figuren 5, 9 und 12 dargestellt ist, größer als die Dicke D2 des Innenabschnittes 18 ist, oder die, wie in Fig. 2 dargestellt ist, gleich der Dicke D2 des Innenabschnittes 18 ist.

Das in Fig. 14 dargestellte Verstärkungsband 10 wird zu einem U-förmigen Profil 26 gebogen, wie dies in den Figuren 4, 6, 10 und 13 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

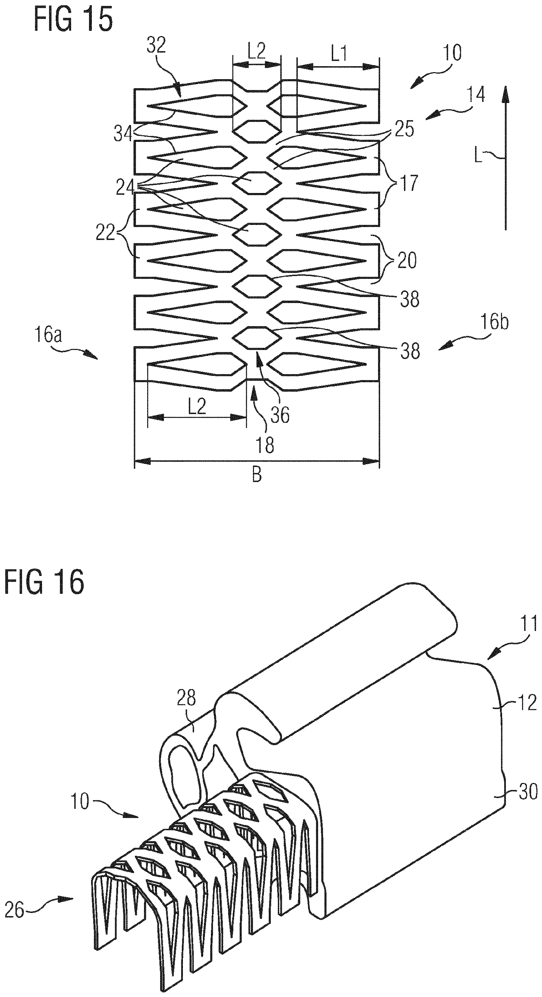

In den Figuren 15 und 16 ist eine sechste Ausführungsform des Verstärkungsbandes 10 gezeigt, die sich von den anderen Ausführungsformen in der Ausgestaltung der Randschlitze 20 und der Innenschlitze 24 unterscheidet.

Wie in Fig. 15 ersichtlich ist, sind die Randschlitze 20 V-förmig ausgebildet, indem die Randschlitze 20 spitz nach innen zulaufen.

Die Innenschlitze 24 sind aus zwei ersten Reihen 32 mit einer ersten Kontur 34 und aus einer zweiten Reihe 36 mit einer zweiten Kontur 36 gebildet, wobei die Innenschlitze 24 der ersten Reihe 32 länger sind als die Innenschlitze 24 der zweiten Reihe 36. Die erste Kontur 34 weist näherungsweise eine Tropfenform auf und die zweite Kontur 36 weist näherungsweise die Form eines Hexaeders auf.

Wie in Fig. 15 ersichtlich ist, ist abwechselnd in Längsrichtung L des Verstärkungsbandes 10 zwischen zwei Randschlitzen 22 jeweils ein Innenschlitz 24 der zweiten Reihe 36 angeordnet und zwischen jeweils zwei aufeinanderfolgenden Paaren von Randschlitzen 20 sind zwei sich gegenüberliegende Innenschlitze 24 der ersten Reihe 32 angeordnet.

Die Randschlitze 20 der sechsten Ausführungsform weisen eine Länge L1 auf, die ca. 1/3 der Breite B des Verstärkungsbandes 10 entspricht. Die Innenschlitze 24 der ersten Reihe 32 weisen eine Länge L2 auf, die ca. 1/3 der Breite B des Verstärkungsbandes 10 entspricht und die Innenschlitze 24 der zweiten Reihe 36 weisen eine Länge L2 auf, die ca. 1/8 der Breite B des Verstärkungsbandes 10 entspricht. Bei der in Fig. 15 dargestellten sechsten Ausführungsform des Verstärkungsbandes 10 können die Randabschnitte 16a, 16b eine Dicke D1 aufweisen, die, wie in den Figuren 5, 9 und 12 dargestellt ist, größer als die Dicke D2 des Innenabschnittes 18 ist, oder die, wie in Fig. 2 dargestellt ist, gleich der Dicke D2 des Innenabschnittes 18 ist.

Das in Fig. 15 dargestellte Verstärkungsband 10 wird zu einem U-förmigen Profil 26 gebogen, wie dies in den Figuren 4, 6, 10 und 13 dargestellt ist, und in einem Extrusionsverfahren mit einem Kunststoff oder elastomeren Material umspritzt, um den in Fig. 16 dargestellten Dichtungsstrang 12 zu erzeugen.

Das Verstärkungsband 10 weist aufgrund der eingesetzten Werkstoffe eine erhöhte Zugfestigkeit auf. Dadurch kann der Grundkörper 14 weiter gereckt werden, das heißt in die Länge gezogen werden. Infolgedessen kann der Materialeinsatz reduziert und gleichzeitig das Gewicht des Verstärkungsbandes 10 verringert werden.

### Bezugszeichenliste

- 10: Verstärkungsband
- 11: Formkörper
- 12: Dichtungsstrang
- 14: bandförmiger Grundkörper
- 16a: erster Randabschnitt
- 16b: zweiter Randabschnitt
- 17: Lamellen
- 18: Innenabschnitt
- 20: Randschlitz
- 22: Rand
- 24: Innenschlitz
- 25: Steg
- 26: U-Profil
- 28: Dichtlippe
- 30: Aufsteckschacht
- 32: erste Reihe
- 34: erste Kontur
- 36: zweite Reihe
- 38: zweite Kontur

- L: Längsrichtung
- B: Breite des Verstärkungsbandes
- D: Dicke des Verstärkungsbandes
- L1: Länge eines Randschlitzes
- L2: Länge eines Innenschlitzes
- Bs: Breite des Stegs
- D1: Dicke eines Randabschnittes
- D2: Dicke des Innenabschnittes

## Patentansprüche

1. Verstärkungsband (10) für einen Formkörper (11) aus einer spritzfähigen Formmasse, aufweisend einen bandförmigen Grundkörper (14), der eine Vielzahl an aufgeweiteten Randschlitzen (20), die sich von Randabschnitten (16a, 16b) des Grundkörpers (14) quer zu seiner Längsrichtung (L) nach innen erstrecken, und eine Vielzahl an aufgeweiteten Innenschlitzen (24), die in einem zwischen den Randabschnitten (16a, 16b) des Grundkörpers (14) befindlichen Innenabschnitt (18) angeordnet sind, aufweist, wobei eine Öffnungsweite der Randschlitze (20) und/oder der Innenschlitze (24) zwischen 0,5 mm und 4 mm beträgt, und wobei der Grundkörper (14) aus einem der folgenden Werkstoffe besteht:
a. HC420LA - Werkstoffnummer: 1.0556
b. HC300B - Werkstoffnummer: 1.0444
c. HCT490X - Werkstoffnummer: 1.0939
d. HCT780T - Werkstoffnummer: 1.0948
e. HCT780C - Werkstoffnummer: 1.0954

2. Verstärkungsband (10) für einen Formkörper (11) aus einer spritzfähigen Formmasse, aufweisend einen bandförmigen Grundkörper (14), der eine Vielzahl an aufgeweiteten Randschlitzen (20), die sich von Randabschnitten (16a, 16b) des Grundkörpers (14) quer zu seiner Längsrichtung (L) nach innen erstrecken, und eine Vielzahl an aufgeweiteten Innenschlitzen (24), die in einem zwischen den Randabschnitten (16a, 16b) des Grundkörpers (14) befindlichen Innenabschnitt (18) angeordnet sind, aufweist, wobei eine Öffnungsweite der Randschlitze (20) und/oder der Innenschlitze (24) zwischen 0,5 mm und 4 mm beträgt, und wobei der Grundkörper (14) aus einem der folgenden Werkstoffe besteht:
• GB/T 1591 Q420 C
• GB/T 1591 Q460 C

3. Verstärkungsband (10) für einen Formkörper (11) aus einer spritzfähigen Formmasse, aufweisend einen bandförmigen Grundkörper (14), der eine Vielzahl an aufgeweiteten Randschlitzen (20), die sich von Randabschnitten (16a, 16b) des Grundkörpers (14) quer zu seiner Längsrichtung (L) nach innen erstrecken, und eine Vielzahl an aufgeweiteten Innenschlitzen (24), die in einem zwischen den Randabschnitten (16a, 16b) des Grundkörpers (14) befindlichen Innenabschnitt (18) angeordnet sind, aufweist, wobei eine Öffnungsweite der Randschlitze (20) und/oder der Innenschlitze (24) zwischen 0,5 mm und 4 mm beträgt, und wobei der Grundkörper (14) aus einem der folgenden Werkstoffe besteht:
• ASTM A1008 HSLA-S Grade 45
• ASTM A1008 HSLA-S Grade 55

4. Verstärkungsband (10) nach einem der vorhergehenden Ansprüche, **dadurch gekennzeichnet, dass** der Grundkörper (14) eine Dicke (D) zwischen 0,4 mm und 0,5 mm, insbesondere zwischen 0,41 mm und 0,47 mm, weiterhin insbesondere zwischen 0,43 mm und 0,46mm aufweist.

5. Verstärkungsband (10) nach einem der vorhergehenden Ansprüche, **dadurch gekennzeichnet, dass** die Randschlitze (20) eine Länge (L1) aufweisen, die zwischen einem Drittel und der Hälfte einer Breite (B) des Verstärkungsbandes (10) entspricht, und die Innenschlitze (24) weisen eine Länge (L2) auf, die zwischen 1/8 und 2/3 der Breite (B) des Verstärkungsbandes (10) entspricht.

6. Verstärkungsband (10) nach einem der vorhergehenden Ansprüche, **dadurch gekennzeichnet, dass** die Innenschlitze (24) aus wenigstens einer ersten Reihe (32) mit einer ersten Kontur (34) und aus wenigstens einer zweiten Reihe (36) mit einer zweiten Kontur (38) gebildet sind.

7. Verstärkungsband (10) nach einem der vorhergehenden Ansprüche, **dadurch gekennzeichnet, dass** sich die Randschlitze (20) und die Innenschlitze (24) quer zur Längsrichtung (L) überlappen, wobei die überlappenden Randschlitze (20) und Innenschlitze (24) durch Stege (25) voneinander getrennt sind, wobei die Stege (25) eine Breite (Bs) zwischen 1 mm und 3 mm aufweisen.

8. Verstärkungsband (10) nach einem der vorhergehenden Ansprüche, **dadurch gekennzeichnet, dass** abwechselnd in Längsrichtung (L) des Verstärkungsbandes (10) zwei Randschlitze (20) einander gegenüberliegend und in Längsrichtung (L) versetzt dazu ein Innenschlitz (24) angeordnet sind.

9. Verstärkungsband (10) nach einem der Ansprüche 1 bis 7, **dadurch gekennzeichnet, dass** abwechselnd in Längsrichtung (L) des Verstärkungsbandes (10) ein Randschlitz (20) eines ersten Randabschnittes (16a) und ein Innenschlitz (24) einander gegenüberliegend und in Längsrichtung (L) versetzt dazu ein Randschlitz (20) eines zweiten Randabschnittes (16b) und ein Innenschlitz (24) einander gegenüberliegend angeordnet sind.

10. Verstärkungsband (10) nach einem der Ansprüche 1 bis 7, **dadurch gekennzeichnet, dass** abwechselnd in Längsrichtung (L) des Verstärkungsbandes (10) zwischen zwei sich paarweise gegenüberliegenden Randschlitzen (20) ein Innenschlitz (24) und in Längsrichtung (L) versetzt dazu zwei sich gegenüberliegende Innenschlitze (24) angeordnet sind.

11. Verstärkungsband (10) nach einem der vorhergehenden Ansprüche, **dadurch gekennzeichnet, dass** eine Dicke (D1) der Randabschnitte (16) größer als eine Dicke (D2) des Innenabschnittes (18) ist.

12. Verstärkungsband (10) nach einem der vorhergehenden Ansprüche, **dadurch gekennzeichnet, dass** der Grundkörper (14) ein Warm- oder Kaltumformstahl ist.

13. Formkörper (11) aus einer spritzfähigen Formmasse, aufweisend ein Verstärkungsband (10) nach einem der Ansprüche 1 bis 12.

14. Formkörper (11) nach Anspruch 13, **dadurch gekennzeichnet, dass** das Verstärkungsband (10) zu einem V-förmigen Profil oder einem U-Förmigen Profil (26) umgeformt ist.

15. Formkörper (11) nach Anspruch 13 oder 14, **dadurch gekennzeichnet, dass** der Formkörper (11) ein Dichtungsstrang (12) für ein Fahrzeug ist.

## Claims

1. A reinforcing strip (10) for a moulded body (11) made of an injectable moulding compound, having a strip-shaped base body (14) which has a multiplicity of widened edge slits (20) which extend inwards from edge sections (16a, 16b) of the base body (14) transversely to its longitudinal direction (L), and a multiplicity of widened inner slits (24) which are arranged in an inner section (18) located between the edge sections (16a, 16b) of the base body (14), which are arranged in an inner section (18) located between the edge sections (16a, 16b) of the base body (14), wherein an opening width of the edge slits (20) and/or the inner slits (24) is between 0.5 mm and 4 mm, and wherein the base body (14) consists of one of the following materials:
a. HC420LA - Material number: 1.0556
b. HC300B - Material number: 1.0444
c. HCT490X - Material number: 1.0939
d. HCT780T - Material number: 1.0948
e. HCT780C - Material number: 1.0954

2. Reinforcing strip (10) for a moulded body (11) made of an injectable moulding compound, having a strip-shaped base body (14) which has a multiplicity of widened edge slits (20) which extend inwards from edge sections (16a, 16b) of the base body (14) transversely to its longitudinal direction (L), and a multiplicity of widened inner slits (24), which are arranged in an inner section (18) located between the edge sections (16a, 16b) of the base body (14), wherein an opening width of the edge slits (20) and/or the inner slits (24) is between 0.5 mm and 4 mm, and wherein the base body (14) consists of one of the following materials:
• GB/T 1591 Q420 C
• GB/T 1591 Q460 C

3. Reinforcing strip (10) for a moulded body (11) made of an injectable moulding compound, having a strip-shaped base body (14) which has a multiplicity of widened edge slits (20) which extend inwards from edge sections (16a, 16b) of the base body (14) transversely to its longitudinal direction (L), and a multiplicity of widened inner slits (24) which are arranged in an inner section (18) located between the edge sections (16a, 16b) of the base body (14), which are arranged in an inner section (18) located between the edge sections (16a, 16b) of the base body (14), wherein an opening width of the edge slits (20) and/or the inner slits (24) is between 0.5 mm and 4 mm, and wherein the base body (14) consists of one of the following materials:
• ASTM A1008 HSLA-S Grade 45
• ASTM A1008 HSLA-S Grade 55

4. Reinforcing strip (10) according to one of the preceding claims, **characterised in that** the base body (14) has a thickness (D) of between 0.4 mm and 0.5 mm, in particular between 0.41 mm and 0.47 mm, furthermore in particular between 0.43 mm and 0.46 mm.

5. Reinforcing strip (10) according to one of the preceding claims, **characterised in that** the edge slits (20) have a length (L1) which corresponds to between one third and one half of a width (B) of the reinforcing strip (10), and the inner slits (24) have a length (L2) which corresponds to between 1/8 and 2/3 of the width (B) of the reinforcing strip (10).

6. Reinforcing strip (10) according to one of the preceding claims, **characterised in that** the inner slits (24) are formed from at least one first row (32) with a first contour (34) and from at least one second row (36) with a second contour (38).

7. Reinforcing strip (10) according to one of the preceding claims, **characterised in that** the edge slits (20) and the inner slits (24) overlap transversely to the longitudinal direction (L), the overlapping edge slits (20) and inner slits (24) being separated from one another by webs (25), the webs (25) having a width (Bs) of between 1 mm and 3 mm.

8. Reinforcing strip (10) according to one of the preceding claims, **characterised in that** two edge slits (20) are arranged alternately opposite one another in the longitudinal direction (L) of the reinforcing strip (10) and an inner slit (24) is arranged offset thereto in the longitudinal direction (L).

9. Reinforcing strip (10) according to one of claims 1 to 7, **characterised in that** an edge slit (20) of a first edge section (16a) and an inner slit (24) are arranged alternately opposite one another in the longitudinal direction (L) of the reinforcing strip (10) and an edge slit (20) of a second edge section (16b) and an inner slit (24) are arranged opposite one another offset thereto in the longitudinal direction (L).

10. Reinforcing strip (10) according to one of claims 1 to 7, **characterised in that** an inner slit (24) is arranged alternately in the longitudinal direction (L) of the reinforcing strip (10) between two edge slits (20) lying opposite one another in pairs and two inner slits (24) lying opposite one another are arranged offset thereto in the longitudinal direction (L).

11. Reinforcing strip (10) according to one of the preceding claims, **characterised in that** a thickness (D1) of the edge sections (16) is greater than a thickness (D2) of the inner section (18).

12. Reinforcing strip (10) according to one of the preceding claims, **characterised in that** the base body (14) is a hot-formed or cold-formed steel.

13. A moulded body (11) made of an injectable moulding compound, comprising a reinforcing strip (10) according to one of claims 1 to 12.

14. Moulded body (11) according to claim 13, **characterised in that** the reinforcing strip (10) is formed into a V-shaped profile or a U-shaped profile (26).

15. Moulded body (11) according to claim 13 or 14, **characterised in that** the moulded body (11) is a sealing strip (12) for a vehicle.

## Revendications

1. Une bande de renforcement (10) pour un corps moulé (11) à partir d'une masse de moulage injectable, présentant un corps de base (14) en forme de bande, qui présente une pluralité de fentes de bord (20) élargies, qui s'étendent vers l'intérieur à partir de sections de bord (16a, 16b) du corps de base (14) transversalement à sa direction longitudinale (L), et une pluralité de fentes intérieures (24) élargies, qui sont disposées dans une section intérieure (18) se trouvant entre les sections de bord (16a, 16b) du corps de base (14), une largeur d'ouverture des fentes de bord (20) et/ou des fentes intérieures (24) étant comprise entre 0,5 mm et 4 mm, et le corps de base (14) étant constitué de l'un des matériaux suivants :
a. HC420LA - Numéro de matériau : 1.0556
b. HC300B - Numéro de matériau : 1.0444
c. HCT490X - Numéro de matériau : 1.0939
d. HCT780T - Numéro de matériau : 1.0948
e. HCT780C - Numéro de matériau : 1.0954

2. La bande de renforcement (10) pour un corps moulé (11) à partir d'une masse à mouler injectable, présentant un corps de base (14) en forme de bande, qui présente une pluralité de fentes de bord (20) élargies, qui s'étendent vers l'intérieur à partir de sections de bord (16a, 16b) du corps de base (14) transversalement à sa direction longitudinale (L), et une pluralité de fentes intérieures (24) élargies, qui sont disposées dans une section intérieure (18) se trouvant entre les sections de bord (16a, 16b) du corps de base (14), une largeur d'ouverture des fentes de bord (20) et/ou des fentes intérieures (24) étant comprise entre 0,5 mm et 4 mm, et le corps de base (14) étant constitué de l'un des matériaux suivants :
• GB/T 1591 Q420 C
• GB/T 1591 Q460 C

3. La bande de renforcement (10) pour un corps moulé (11) à partir d'une masse de moulage injectable, présentant un corps de base (14) en forme de bande, qui présente une pluralité de fentes de bord (20) élargies, qui s'étendent vers l'intérieur à partir de sections de bord (16a, 16b) du corps de base (14) transversalement à sa direction longitudinale (L), et une pluralité de fentes intérieures (24) élargies, qui sont disposées dans une section intérieure (18) se trouvant entre les sections de bord (16a, 16b) du corps de base (14), une largeur d'ouverture des fentes de bord (20) et/ou des fentes intérieures (24) étant comprise entre 0,5 mm et 4 mm, et le corps de base (14) étant constitué de l'un des matériaux suivants :
• ASTM A1008 HSLA-S Grade 45
• ASTM A1008 HSLA-S Grade 55

4. La bande de renforcement (10) selon l'une quelconque des revendications précédentes, **caractérisée en ce que** le corps de base (14) présente une épaisseur (D) comprise entre 0,4 mm et 0,5 mm, notamment entre 0,41 mm et 0,47 mm, en particulier encore entre 0,43 mm et 0,46 mm.

5. La bande de renforcement (10) selon l'une quelconque des revendications précédentes, **caractérisée en ce que** les fentes de bord (20) présentent une longueur (L1) correspondant entre le tiers et la moitié d'une largeur (B) de la bande de renforcement (10), et les fentes intérieures (24) présentent une longueur (L2) correspondant entre 1/8 et 2/3 de la largeur (B) de la bande de renforcement (10).

6. La bande de renforcement (10) selon l'une quelconque des revendications précédentes, **caractérisée en ce que** les fentes intérieures (24) sont formées d'au moins une première rangée (32) ayant un premier contour (34) et d'au moins une deuxième rangée (36) ayant un deuxième contour (38).

7. La bande de renforcement (10) selon l'une des revendications précédentes, **caractérisée en ce que** les fentes de bord (20) et les fentes intérieures (24) se chevauchent transversalement à la direction longitudinale (L), les fentes de bord (20) et les fentes intérieures (24) qui se chevauchent étant séparées les unes des autres par des entretoises (25), les entretoises (25) présentant une largeur (Bs) comprise entre 1 mm et 3 mm.

8. La bande de renforcement (10) selon l'une des revendications précédentes, **caractérisée en ce que** deux fentes de bord (20) sont disposées en alternance dans la direction longitudinale (L) de la bande de renforcement (10), en étant opposées l'une à l'autre, et une fente intérieure (24) est décalée par rapport à ces fentes dans la direction longitudinale (L).

9. La bande de renforcement (10) selon l'une des revendications 1 à 7, **caractérisée en ce que**, alternativement dans la direction longitudinale (L) de la bande de renforcement (10), une fente de bord (20) d'une première section de bord (16a) et une fente intérieure (24) sont disposées en face l'une de l'autre et, décalées dans la direction longitudinale (L) par rapport à celles-ci, une fente de bord (20) d'une deuxième section de bord (16b) et une fente intérieure (24) sont disposées en face l'une de l'autre.

10. La bande de renforcement (10) selon l'une des revendications 1 à 7, **caractérisée en ce qu'**une fente intérieure (24) est disposée en alternance dans la direction longitudinale (L) de la bande de renforcement (10) entre deux fentes de bord (20) opposées par paires et deux fentes intérieures (24) opposées décalées dans la direction longitudinale (L).

11. La bande de renforcement (10) selon l'une quelconque des revendications précédentes, **caractérisée en ce qu'**une épaisseur (D1) des sections de bord (16) est supérieure à une épaisseur (D2) de la section intérieure (18).

12. La bande de renforcement (10) selon l'une des revendications précédentes, **caractérisée en ce que** le corps de base (14) est un acier formé à chaud ou à froid.

13. Un corps moulé (11) constitué d'une masse à mouler injectable, présentant une bande de renforcement (10) selon l'une des revendications 1 à 12.

14. Le corps moulé (11) selon la revendication 13, **caractérisé en ce que** la bande de renforcement (10) est transformée en un profilé en forme de V ou en un profilé en forme de U (26).

15. Le corps moulé (11) selon la revendication 13 ou 14, **caractérisé en ce que** le corps moulé (11) est un cordon d'étanchéité (12) pour un véhicule.
